**Europäisches Patentamt**

**European Patent Office**

**Office européen des brevets**

(19)

(11) Numéro de publication: **0 203 021
B1**

(12)

# FASCICULE DE BREVET EUROPEEN

(45) Date de publication du fascicule du brevet:
**05.04.89**

(21) Numéro de dépôt: **86440035.3**

(22) Date de dépôt: **06.05.86**

(51) Int. Cl.⁴: **A47C 7/68, A47B 31/06**

(54) **Plateau de bord.**

(30) Priorité: **24.05.85 FR 8508280**

(43) Date de publication de la demande:
**26.11.86 Bulletin 86/48**

(45) Mention de la délivrance du brevet:
**05.04.89 Bulletin 89/14**

(84) Etats contractants désignés:
**CH DE GB IT LI LU NL**

(56) Documents cités:
**FR-A- 825 141
US-A- 3 625 161**

(73) Titulaire: **Vandamme, Georges, 25 rue de l'Espérance,
F-59100 Roubaix(Nord)(FR)**

(72) Inventeur: **Vandamme, Georges, 25 rue de l'Espérance,
F-59100 Roubaix(Nord)(FR)**

(74) Mandataire: **Lepage, Jean-Pierre, Cabinet Lepage &
Aubertin Innovations et Prestations 23/25, rue Nicolas
Leblanc B.P. 1069, F-59011 Lille Cédex 1 (Nord)(FR)**

## Description

L'invention est relative à un plateau de bord notamment destiné à être adapté dans des véhicules afin de former pour les passagers arrière un plan de travail offrant toutes commodités pour y déposer des objets.

On connait des longues dates l'utilisation des tablettes de travail dans les voitures de chemin de fer et les avions.

Leur usage est très commode et permet notamment aux passagers de prendre un repas à bord en posant le plateau sur lequel est disposé le déjeuner sur la tablette. Cette tablette peut également servir par exemple comme écritoire ou autre.

Sur le plan de la construction, les tablettes actuelles sont intégrées au dossier du siège sur lequel elles sont fixées par l'intermédiaire d'une articulation à charnière. Cette fixation offre une possibilité de rotation ce qui autorise un repli du plan de la tablette contre le dossier du siège avant afin par exemple de dégager l'accès au siège.

La construction de la tablette est généralement réalisée dans une matière plastique moulée et est inamovible vis-à-vis du dossier du siège avant.

La conception des plateaux de bord actuels est telle qu'il s'agit d'un élément entièrement intégré au dossier du siège et qui ne peut en aucun cas être ôté facilement ou être déplacé.

Par conséquent, la transposition des plateaux de bord actuels à d'autres véhicules ne peut être envisagée indépendamment de la mise en place des siège conçues pour offrir cette commodité.

Un autre inconvénient des plateaux de bord actuels est qu'il n'offre aucun réglage de l'inclinaison de la tablette. Ainsi, lorsque les dossiers des sièges avant présentent une inclinaison variable, la surface de la tablette montre une inclinaison fonction de celle du dossier. Il s'agit d'un incovénient important notamment lorsque par exemple on utilise la tablette pour poser des objets qui resquent de glisser si le plan de travail penche exagérément.

Pour résoudre ce problème, certains sièges présentent un dossier à double paroi dont l'une d'elles est fixe et l'autre présentant le rembourrage est mobile. Il s'agit cependant d'une conception complexe et qui n'offre qu'une possibilité limitée d'inclinaisons du dossier.

Par ailleurs, il est connu du document US-A 3 625 161 un tableau de bord destiné à être adapté notamment sur un siège de véhicule et comprenant un plateau monté sur un cadre présentant d'une part des moyens de fixation dudit plateau et d'autre part des moyens d'accrochage aptes à prendre appui directement sur le haut du dossier du siège à équiper.

Plus précisément, ces moyens d'accrochage se présentent sous la forme de tubes coudés en bec de canne qui peuvent ainsi être placés pour maintenir le plateau de bord, sur la partie haute du siège.

Toutefois, un tel système présente des inconvénients qui se répercutent sur la stabilité du plateau de bord.

Tout d'abord, la stabilité dépend d'une part de la rigidité de la partie haute du siège sur lequel le plateau est monté. Lorsqu'il s'agit d'un siège de véhicule dont le dossier est rembourré, cette stabilité est tout à fait précaire. D'autre part, un tel dispositif ne permet pas de tenir compte de l'inclinaison du siège ce qui impose quasiment le montage sur des sièges dont le dossier est sensiblement vertical.

Le but principal de la présente invention est de présenter un plateau de bord qui permette de pallier les inconvénients précités et qui puisse offrir toutes les commodités aux passagers arrière du véhicule sans qu'il soit nécessaire d'apporter des modifications aux sièges existants.

Par conséquent, le plateau de bord de la présente invention peut très facilement être mis en place dans une voiture de tourisme sans que celle-ci soit équipée de sièges spéciaux prévus d'origine. Cette facilité de mise en place sera particulièrement appréciée des automobilistes qui n'auront à effectuer aucune transformation de leur véhicule.

Un autre but de la présente invention est de présenter un plateau de bord facilement amovible et donc sur le plan de la sécurité, l'invention ne présente aucun danger.

Différentes versions du plateau de bord de la présente invention pourront facilement être réalisées pour s'adapter aux différentes configurations susceptibles d'être rencontrées dans les véhicules. La conception de la présente invention fait appel à des matériels courants et sa fabrication en série à faible coût de revient peut facilement être envisagée.

En outre, contrairement aux tablettes actuelles, le plateau de bord de la présente invention peut être également ajusté en hauteur, ce qui ne pouvait pas être réalisé avec les tablettes incorporées au dossier du siège avant.

D'autres buts et avantages de la présente invention apparaîtront au cours de la description suivante qui n'est cependant donnée qu'à titre indicatif.

Selon la présente invention, le plateau de bord, notamment destiné à être adapté dans des véhicules équipés de sièges avant munis d'appuis-tête, afin de former pour les passagers arrière un plan de travail offrant toutes commodités pour y déposer des objets, ledit appui-tête étant fixé à la partie supérieure du dossier dudit siège par l'intermédiaire d'une ou plusieurs tiges, ledit plateau de bord comprenant:

– un cadre formé au moins de deux montants latéraux réunis au moins par une traverse supérieure,
– des moyens d'accrochage dudit plateau de bord au niveau de la partie supérieure du dossier dudit siège avant,
– un plateau proprement dit constituant ledit plant de travail, et présentant des moyens de fixation amovible audit cadre, est caractérisé par le fait que lesdits moyens d'accrochage sont, d'une part, portés par la traverse supérieure, et aptes à coulisser sur celle-ci pour autoriser l'adaptation auxdites tiges et le positionnement latéral de l'ensemble selon la configuration, et d'autre part, aptes à s'agripper sur la ou lesdites tiges de soution dudit appui-tête afin de former un premier appui, et par le fait qu'il comporte des moyens d'appui verticaux, orientables, aptes à prendre appui sur le dossier dudit siège avant afin de renforcer la stabilité verticale et permettre le positionnement angulaire du plateau.

L'i nvention sera mieux comprise à la lecture de la description suivante accompagnée de dessins en annexe parmi lesquels:

- la figure 1 schématise en vue de perspective la mise en place du cadre et des cornières du plateau de bord de la présente invention sur un siège avant de véhicule,
- la figure 2 illustre en vue de dessus les moyens d'accrochage du cadre,
- la figure 3 illustre un second mode de réalisation des moyens d'accrochage du cadre,
- la figure 4 représente en vue de face un mode de réalisation du cadre de la présente invention,
- la figure 5 représente en vue de côté le cadre de la figure 4,
- la figure 6 représente les détails de réalisation des moyens d'appui verticaux du cadre de la présente invention,
- la figure 7 représente un second mode de réalisation du cadre de la présente invention vue de face,
- la figure 8 représente en vue de côté le cadre de la figure 7,
- la figure 9 schématise en vue de coupe les détails de réalisation des moyens d'accrochage de la cornière sur le cadre,
- la figure 10 représente en perspective la mise en place d'un plateau de bord selon un autre mode de réalisation de l'invention,
- la figure 11 représente en vue de côté le plateau de la figure 10 et illustre les détails de réalisation des moyens d'accrochage et des moyens d'appui verticaux du cadre,
- la figure 12 montre en détail l'assemblage des moyens d'accrochage du cadre illustré aux figures 10 et 11.

La présente invention vise un plateau de bord notamment destiné à être adapté dans des véhicules afin de former pour les passagers arrière un plan de travail offrant toutes commodités pour y déposer des objets.

L'utilisation de tels plateaux de bord est largement répandue dans les avions et les voitures de chemin de fer toutefois leur conception fait qu'ils sont totalement intégrés d'origine au dossier des sièges avant. Les plateaux de bord actuels ne sont pas démontables et ne peuvent être mis en place indépendamment du siège qui les équipent.

Le plateau de bord de la présente invention présente une conception autonome qui laui permet d'être mis en place sur des sièges de voiture classique sans que ces derniers aient à subir une quelconque transformation.

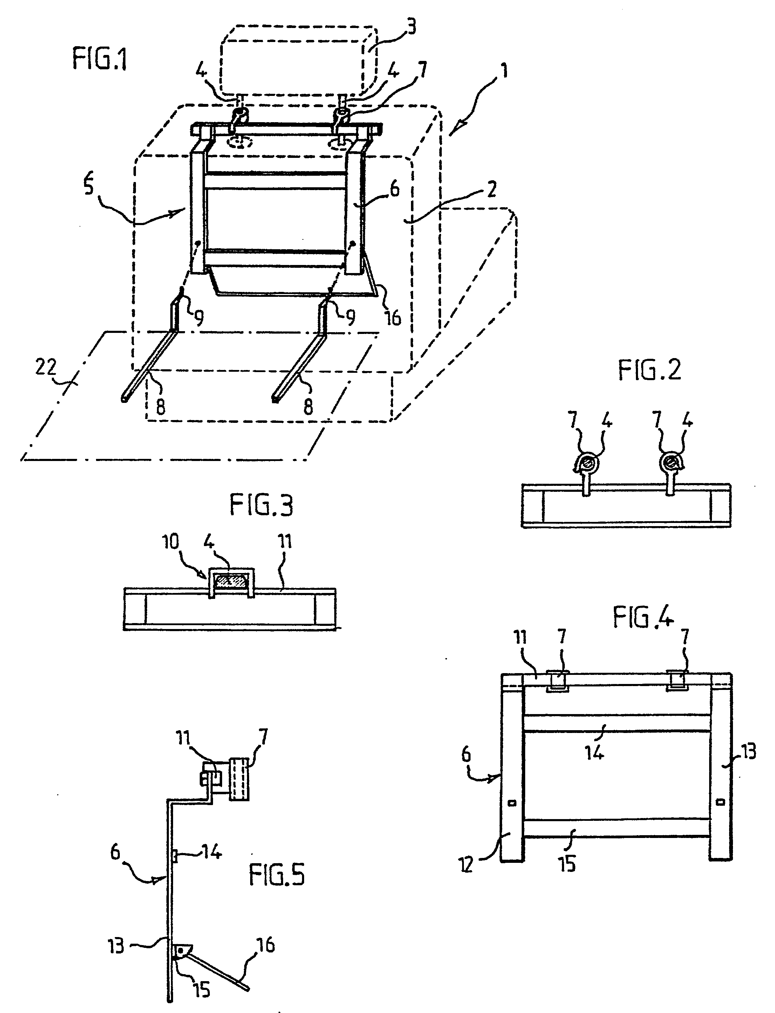

La figure 1 schématise en pointillé un siège avant 1 de véhicule dont le dossier 2 est muni d'un appui-tête 3 fixé au dossier 2 du siège par l'intermédiaire de tiges 4. Il s'agit d'une conception tout à fait classique des sièges avant de véhicule où l'on peut trouver deux principaux types de fixation de l'appui-tête, il s'agit généralement de deux tiges de section ronde ou d'une tige centrale de section allongée. L'étude de ces deux configurations est donnée dans la suite, néanmoins, si d'autres mises en œuvre étaient rencontrées, il appartiendra à l'Homme de l'Art de transformer le moyen de fixation du plateau de bord de la présente invention pour s'adapter au cas rencontré.

Selon l'invention, le plateau de bord 5 comprend un cadre 6 présentant des moyens d'accrochage 7 à la ou aux tiges 4 de soutien des appuis-tête 3 et un plateau 22, illustré en trait mixte sur la figure 1, monté sur des cornières 8 présentant des moyens de fixation 9 amovibles au cadre 6 du plateau de bord 5 de la présente invention.

Les moyens d'accrochage du cadre peuvent par exemple se présenter sous la forme de bagues fendues 7 telles qu'illustrées à la figure 2. Les bagues fendues sont parfaitement adaptées pour venir se fixer sur les tiges 4 de fixation de l'appui-tête 3 sur le dossier 2 du siège avant 1.

Les moyens d'accrochage 7 peuvent également se présenter sous la forme d'une chape 10, perforée de deux orifices, telle qu'illustrée à la figure 3, apte à coulisser latéralement dans la traverse supérieure 11 du cadre 6. Cette forme de chape 10 est plus particulièrement adaptée lorsque l'appui-tête 3 est fixé au dossier 2 du siège avant 1 part l'intermédiaire d'une tige unique 4 de forme allongée, telle que notamment rectangulaire.

Les deux exemples envisagés précédemment représentent les deux conceptions généralement utilisées par les constructeurs automobiles.

On peut remarquer que les moyens d'accrochage 7 tels qu'envisagés par la présente invention laissent la faculté au passager avant de régler la hauteur de l'appui-tête 3 sans avoir à démonter le plateau de bord.

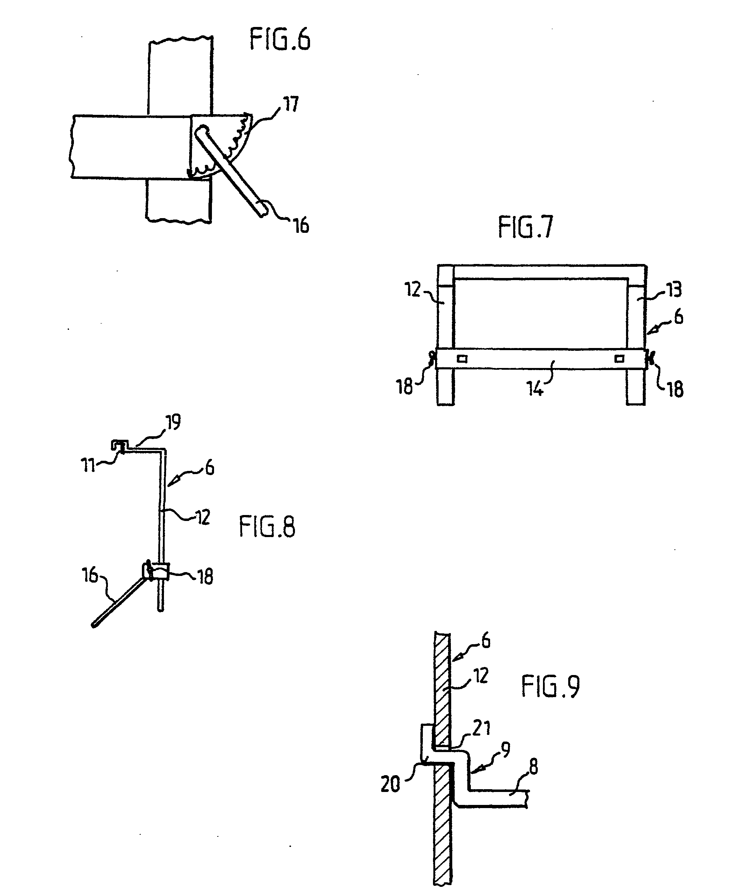

La figure 4 schématise un mode de réalisation du cadre 6 de la présente invention dans lequel le cadre 6 se compose de deux montants latéraux 12 et 13 maintenus par des traverses 14 et 15 et qui dispose d'une traverse supérieure 11 sur laquelle les moyens d'accrochage 7 peuvent coulisser latéralement le long de la dite traverse supérieure 11. Cette faculté de coulissement permet d'ajuster l'écartement entre les moyens d'accrochage 7 de sorte que celui-ci corresponde à l'écartement des tiges 4 de soutien de l'appui-tête 3 sur le dossier 2 du siège avant 1.

Par ailleurs, ce coulissement permet également d'ajuster le positionnement latéral de l'ensemble du cadre 6 pour que celui-ci se place face aux passagers arrière.

A la figure 5, qui représente le cadre 6 de la figure 4 vue de côté, on peut observer que de préférence, la traverse supérieure 11 du cadre 6 présente un déport par rapport au plan du dit cadre 6. Cette disposition facilite la mise en place verticale du cadre 6.

Pour renforcer la stabilité verticale du cadre, ce dernier présente des moyens d'appui verticaux 16. Les moyens d'appui se présentent par exemple sous la forme d'une tringle 16 orientable d'appui sur le dossier 2 du siège avant 1.

La tringle 16 est pliée en forme de U telle qu'illustrée à la figure 1 de sorte à maintenir l'horizontalité du cadre 6. La tringle 16 est orientable pour que son positionnement soit ajustable en fonction de l'inclinaison du dossier 2 du siège 1.

Plusieurs dispositifs peuvent être envisagés pour le réglage de l'inclinaison de la tringle 16 néanmoins de bons résultats peuvent être obtenus en utilisant des crans 17 tels qu'illustrés à la figure 6. De par son élasticité, la tringle 16 vient se bloquer dans l'un des crans 17 qui fixe le positionnement angulaire de la tringle 16 par rapport au plan du cadre 6.

D'autres moyens de fixation de la tringle 16 peuvent être envisagés tels que notamment l'utilisation d'un système vis-écrou.

Précisément, le second mode de réalisation de l'invention et en particulier du cadre 6 illustré aux figures 7 et 8 utilise comme moyens de fixation angulaires de la tringle 16 un dispositif vis-écrou papillon 18. Selon cette réalisation, le cadre 6 est formé de deux montants 12 et 13 tubulaires réunis par une traverse médiane 14. L'extrémité supérieure des montants 12 et 13 présente un décrochement 19 qui permet au cadre 6 de venir s'accrocher sur la traverse supérieure 11. La fixation du cadre 6 sur la traverse supérieure 11 peut être envisagée de façon amovible.

La figure 9 illustre un mode préférentiel de réalisation des moyens de fixation 9 amovibles des cornières 8 de soutien du plateau sur les montants 12 et 13 du cadre 6. En particulier, les moyens 9 de fixation se présentent sous la forme de crochets 20 solidaires de la cornière 8 et d'orifices 21 pratiqués dans les montants 12 et 13 du cadre 6 apte à recevoir les dits crochets 20.

Ce mode de fixation amovible est particulièrement bien adapté pour la mise en place d'un plateau dont on pourra ajuster la hauteur en prévoyant la réalisation de différents trous 21 le long des montants 12 et 13 du cadre 6.

Selon un autre mode de réalisation de l'invention, les moyens de fixation 9 peuvent se présenter sous la forme de charnières articulées permettant de replier le plateau de bord.

La fixation du plateau sur les cornières 8 pourra être envisagée de façon définitive à l'aide de rivets par exemple. La confection du cadre peut être envisagée à l'aide d'éléments de tôlerie mécano-soudée.

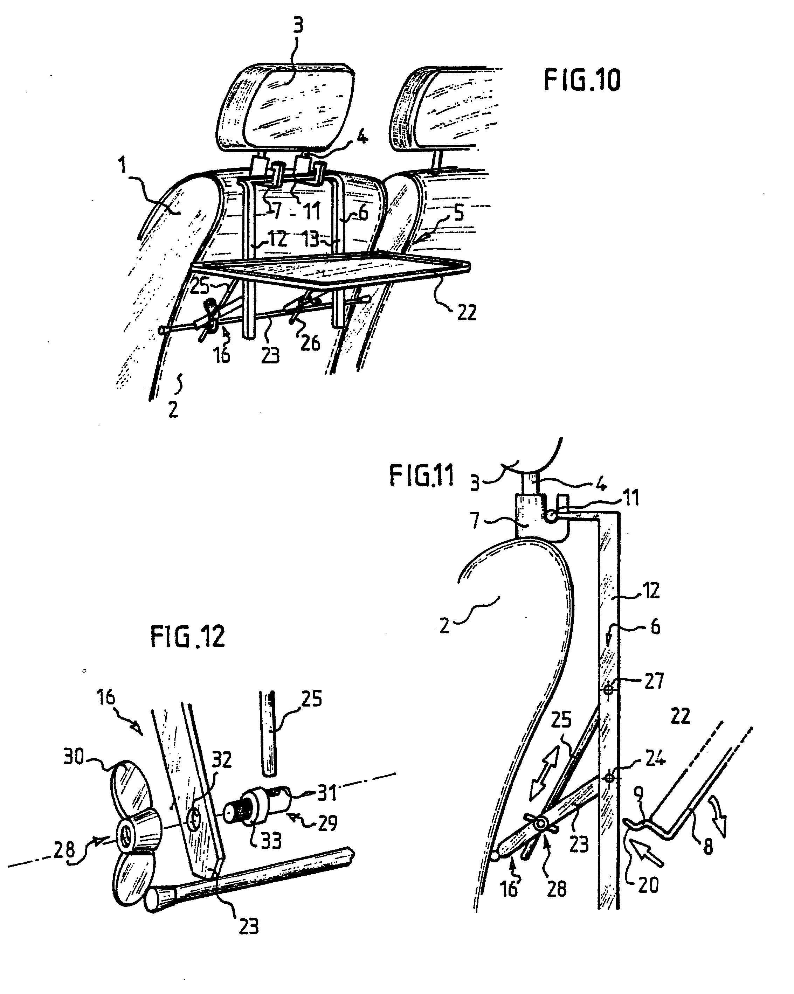

Les figures 10 à 12 représentent un autre mode de réalisation du plateau de bord de la présente invention. Cette réalisation reprend tous les éléments essentiels décrits précédemment à savoir un cadre 6, des moyens d'accrochage 7, un plateau 22, des moyens de fixation 9 du plateau, et des moyens d'appui verticaux 16.

Plus précisément, le cadre 6 est formé de deux montants latéraux 12 et 13 réunis au moins par une traverse supérieure 11 sur laquelle seront disposés les moyens d'accrochage 7 tels que décrits précédemment.

Toutefois, cet autre mode de réalisation se distingue des précédents par la constitution des moyens d'appui verticaux 16. Ils sont d'une part formés par une tringle 23 articulée en 24 sur chacun des montants latéraux 12 et 13 d'autre part par deux tiges 25 et 26 faisant office de tirants articulés en 27 sur les montants 12 et 13.

Par ailleurs, les moyens 16 d'appui comportent un dispositif de serrage 28 permettant d'immobiliser respectivement la tringle en une position déterminée par la longueur du tirant. Ainsi on obtient un réglage tout à fait continu permettant de positionner le cadre sensiblement verticalement et par suite le plateau 22 horizontalement quelle que soit la configuration des sièges.

La figure 12 montre un mode de réalisation de ces moyens de serrage 28 composés d'une vis 29 à tête percée et d'un écrou à oreilles 30.

La tête de la vis 29 présente un orifice 31 dans lequel vient prendre place et peut coulisser le tirant 25 ou 26. De plus, cette vis 29 présente une extrémité filetée qui vient prendre place dans un orifice 32 percé sur la tringle 23.

Ainsi on réalise un point de fixation qui néanmoins permet l'articulation tringle-tirant et le blocage relatif de ces deux éléments lors du serrage de l'écrou 30 par l'intermédiaire de la rondelle 33 qui sert de butée entre la tringle 23 et le tirant 25.

En ce qui concerne les moyens de fixation 9 amovibles des cornières de soutien du plateau sur les montants 12 et 13 du cadre 6, leur réalisation est similaire de celle décrite précédemment. Ils sont essentiellement formés par des crochets 20 solidaires de la cornière 8 et d'orifices adaptés pratiqués dans les montants 12 et 13 du cadre.

Il est à remarquer que cette réalisation donne une bonne rigidité à l'ensemble du cadre et dispense celui-ci des traverses médianes 14 et 15 prévues dans le mode de réalisation des figures 1, 4 et 7.

D'autres mises en œuvre de la présente invention, à la portée de l'Homme de l'Art, auraient pu être envisagées sans pour autant sortir du cadre de celle-ci.

**Revendications**

1. Plateau de bord, notamment destiné à être adapté dans des véhicules équipés de sièges avant (1) munis d'appuis-tête (3), afin de former pour les passagers arrière un plan de travail offrant toutes commodités pour y déposer des objets, ledit appui-tête (3) étant fixé à la partie supérieure du dossier (2) dudit siège (1) par l'intermédiaire d'une ou plusieurs tiges (4), ledit plateau de bord comprenant:
   – un cadre (6) formé au moins de deux montants latéraux (12, 13) réunis au moins par une traverse supérieure (11),
   – des moyens d'accrochage (7) dudit plateau de bord (5) au niveau de la partie supérieure du dossier (2) dudit siège avant (2).
   – un plateau (22) proprement dit constituant ledit plan de travail, et présentant des moyens de fixation (9) amovible audit cadre (6),
caractérisé par le fait que lesdits moyens d'accrochage (7; 10) sont, d'une part, portés par la traverse supérieure (11), et aptes à coulisser sur celle-ci pour autoriser l'adaptation auxdites tiges (4) et le positionnement latéral de l'ensemble selon la configuration, et d'autre part, aptes à s'agripper sur la ou lesdites tiges (4) de soutien dudit appui-tête (3) afin de former un premier appui, et par le fait qu'il comporte des moyens d'appui verticaux, orientables, aptes à prendre appui sur le dossier (2) dudit siège avant (1) afin de renforcer la stabilité verticale et permettre le positionnement angulaire du plateau.

2. Plateau de bord selon la revendication 1, caractérisé par le fait que les moyens d'accrochage (7) du cadre (6) se présentent sous la forme de bagues fendues.

3. Plateau de bord selon la revendication 1, caractérisé par le fait que les moyens d'accrochage (7) du cadre (6) se présentent sous la forme d'une chape (10), perforée, apte à coulisser latéralement dans la traverse supérieure (11) du cadre (6).

4. Plateau de bord selon la revendication 1, caractérisé par le fait que les moyens d'accrochage (7) du cadre (6) coulissent latéralement le long de la traverse supérieure (11) du cadre (6).

5. Plateau de bord selon la revendication 1, caractérisé par le fait que les moyens d'appui verticaux se présentent sous la forme d'une tringle (16) orientable d'appui sur le dossier (2) du siège avant (1).

6. Plateau de bord selon la revendication 5, caractérisé par le fait que le réglage de l'inclinaison de la tringle (16) est réalisé au moyen de crans (17).

7. Plateau de bord selon la revendication 1, caractérisé par le fait que les moyens d'appui verticaux (16) se présentent sous la forme d'une tringle (23) articulée sur le cadre (6) et par deux tiges formant tirants (25, 26), les tirants et la tringle étant positionnés et bloqués par un dispositif de serrage (28) permettant le réglage de l'inclinaison.

8. Plateau de bord selon la revendication 1, caractérisé par le fait que les moyens de fixation amovibles (9) des cornières (8) de soutien du plateau sur le cadre (6) se présentent sous la forme de crochets (20) dans les montants (12 et 13) du cadre (6) apte à recevoir lesdits crochets (20).

9. Plateau de bord selon la revendication 1, caractérisé par le fait que les moyens de fixation amovible (9) des cornières (8) du soutien du plateau sur le cadre (6) se présentent sous la forme de charnières articulées permettant de replier le plateau.

## Claims

1. A tray board, particulary intended for being adapted for vehicles equipped with front seats (1) provided with head-rests (3) in order to form for the rear passengers a working plan offering all conveniences for laying down articles thereon, said head-rest (3) being fasted to the upper part of the back (2) of said seat (1) through one or several rods (4), said board tray comprising
   – a frame (6) composed at least of two lateral uprights (12, 13) joined at least with an upper cross-bar (11),
   – hooking means (7) of said board tray (5) on a level with the upper part of the back (2) of said front seat (1),
   – a properly so called tray (22) constituting said working plan and having means (9) for removable fixing to said frame (6), characterized by the fact that said hooking means (7; 10) are, on the one hand, carried by the upper cross-bar (11) and able to slide on this bar in order to allow the adaptation to said rods (4) and the lateral positioning of the whole according to configuration and, on the other hand, able to grip said rod or rods (4) of said head-rest (3) in order to form a first support and by the fact that it comprises vertical supporting and swivelling means able to come leaning on the back (2) of said front seat (1) in order to reinforce the vertical stability and permit the angular positioning of the tray.

2. A board tray according to claim 1, characterized by the fact that the hooking means (7) of the frame (6) are in the shape of split rings.

3. A board tray according to claim 1, characterized by the fact that the hooking means (7) of the frame (6) are in the shape of a perforated cap able to laterally slide into the upper cross-bar (11) of the frame (6).

4. A board tray according to claim 1, characterized by the fact that the hooking means (7) of the frame (6) slide along the upper cross-bar (11) of the frame (6).

5. A board tray according to claim 1, characterized by the fact that the vertical supporting means are in the shape of a supporting and swivelling rod (16) on the back (2) of the front seat (1).

6. A board tray according to claim 5, characterized by the fact that the adjustment of the tilt of the rod (16) is realized by means of notches (17).

7. A board tray according to claim 1, characterized by the fact that the vertical supporting means (6) are in the shape of a rod (23) articulated with the frame (6) and two rods as tie-bolts (25, 26), said tie-bolts and rod being positioned and clamped by a tightening device (28) allowing the adjustment of the tilt.

8. A board tray according to claim 1, characterized by the fact that the means (9) for removable fixing of the supporting angle-irons (8) of the tray on the frame (6) are in the shape of hooks (20) in the uprights (12 and 13) of frame (6) able to receive said hooks (20).

9. A board tray according to claim 1, characterized by the fact that the means (9) for removable fixing of the supporting angle-irons (8) of tray on the frame (6) are in the shape of articulated hings allowing to fold up the tray.

## Patentansprüche

1. Ablagetablett, insbesondere zum Anbringen in Fahrzeugen, deren vordere Sitze (1) mit Kopfstützen (3) ausgerüstet sind, mit dem Ziel, eine Arbeitsfläche für die Fahrgäste im Fond zu erhalten, auf der Gegenstände abgelegt werden können, wobei die besagte Kopfstütze (3) über eine oder mehrere Stangen (4) an dem oberen Teil der Lehne (2) des besagten Sitzes (1) befestigt ist, aus:
   – einem Rahmen (6), der mindestens aus zwei seitlichen Holmen (12, 13) besteht, die mindestens durch eine obere Traverse (11) miteinander verbunden sind,

- Mitteln (7) zum Befestigen des besagten Ablagetabletts (5) bei dem oberen Teil der Lehne (2) des besagten vorderen Sitzes (1),
- dem eigentlichen Tablett (22), das die besagte Arbeitsfläche bildet und Mittel (9) zur lösbaren Befestigung an dem besagten Rahmen (6) aufweist,

dadurch gekennzeichnet, daß die besagten Befestigungsmittel (7; 10) einerseits von der oberen Traverse (11) getragen werden und darauf verschoben werden können, damit sie an die besagten Stangen (4) angepaßt werden können, und damit die Einheit in seitlicher Richtung entsprechend der Konfiguration positioniert werden kann, und andererseits an der oder den besagten Haltestangen (4) der besagten Kopfstütze (3) befestigt werden können, um einen ersten Befestigungspunkt zu erhalten, und daß das Ablegetablett ausrichtbare vertikale Stützmittel aufweist, die auf der Lehne (2) des besagten vorderen Sitzes (1) aufliegen, um die vertikale Stabilität zu erhöhen, und um die winkelmäßige Positionierung des Tabletts zu ermöglichen.

2. Ablagetablett gemäß Anspruch 1, dadurch gekennzeichnet, daß die Mittel (7) zum Befestigen des Rahmens (6) die Form von gespaltenen Ringen haben.

3. Ablagetablett gemäß Anspruch 1, dadurch gekennzeichnet, daß die Mittel (7) zum Befestigen des Rahmens (6) die Form eines mit einer Bohrung versehenen Bügels (19) haben, der in der oberen Traverse (11) des Rahmens (6) in seitlicher Richtung verschoben werden kann.

4. Ablagetablett gemäß Anspruch 1, dadurch gekennzeichnet, daß die Mittel (7) zum Befestigen des Rahmens (6) längs der oberen Traverse (11) des Rahmens (6) in seitlicher Richtung verschoben werden können.

5. Ablagetablett gemäß Anspruch 1, dadurch gekennzeichnet, daß die vertikalen Abstützmittel die Form einer ausrichtbaren Stange (16) haben, die sich auf der Lehne (2) des vorderen Sitzes (1) abstützt.

6. Ablagetablett gemäß Anspruch 5, dadurch gekennzeichnet, daß die Einstellung der Neigung der Stange (16) mittels Rastkerben (17) erfolgt.

7. Ablagetablett gemäß Anspruch 1, dadurch gekennzeichnet, daß die vertikalen Abstützmittel (16) die Form einer auf dem Rahmen (6) gelenkig gelagerten Stange (23) mit zwei Streben (25, 26) haben, wobei die Streben und die Stange durch eine Feststellvorrichtung (28), über die die Neigung eingestellt werden kann, positioniert und festgestellt werden.

8. Ablagetablett gemäß Anspruch 1, dadurch gekennzeichnet, daß die Mittel (9) zur lösbaren Befestigung der Auflage-Winkelprofile (8) für das Tablett auf dem Rahmen (6) die Form von Haken (20) in den Holmen (12 und 13) des Rahmens (6) haben, wobei diese Öffnungen die besagten Haken (20) aufnehmen können.

9. Ablagetablett gemäß Anspruch 1, dadurch gekennzeichnet, daß die Mittel (9) zur lösbaren Befestigung der Auflage-Winkelprofile (8) auf dem Rahmen (6) die Form von Scharnieren haben, über die das Tablett hochgeklappt werden kann.

EP 0 203 021 B1

FIG.1

FIG.2

FIG.3

FIG.4

FIG.5

FIG.6

17

16

FIG.7

12

13

6

18

14

18

19

11

6

12

FIG.8

16

18

6

12

FIG.9

21

20

9

8

FIG.10

FIG.11

FIG.12